# EUROPEAN PATENT APPLICATION

(11) **EP 4 013 098 A1**
(43) Date of publication of application: **15.06.2022**
(21) Application number: 20852189.8
(22) Date of filing: 20.07.2020
(51) Int. Cl.: H04W 24/00, H04W 72/04

(54) **PROCESSING METHOD AND DEVICE**

(30) Priority: 09.08.2019 CN 201910736595
(71) Applicant: Vivo Mobile Communication Co., Ltd., Dongguan, Guangdong 523860 (CN)
(72) Inventor: JIANG, Dajie, Dongguan, Guangdong 523860 (CN); CHEN, Li, Dongguan, Guangdong 523860 (CN); BAO, Wei, Dongguan, Guangdong 523860 (CN)
(74) Representative: Conti, Marco
(86) International application number: PCT/CN2020/103102
(87) International publication number: WO 2021/027499

(57) **Abstract**

Embodiments of the present disclosure provide a processing method and a device. The method includes: sending first information to a Pcell of an MCG or a PScell of an SCG; and receiving second information from the Pcell of the MCG or the PScell of the SCG, releasing adding or changing the cell of the MCG or SCG according to the second information, and/or changing the maximum number of multi-input multi-output layers of the cell of the MCG or SCG or the maximum number of antenna ports according to the second information.

## Description

### CROSS-REFERENCE TO RELATED APPLICATION

The present application claims priority to Chinese Patent Application No. 201910736595.X filed in China on August 9, 2019, which is incorporated herein by reference in its entirety.

### TECHNICAL FIELD

Embodiments of the present disclosure relate to the technical field of communication, and in particular, to a processing method and a device.

### BACKGROUND

With the development of intelligent terminal and terminal artificial intelligence (Artificial Intelligence, AI), terminals can grasp various information more comprehensively, for example, terminals can know the main reason of terminal temperature rise in real time more than base stations, such as which reasons or modules mainly causing the terminal temperature rise.

The terminal in related art can report overheating information to the base station, but the base station still cannot accurately know the main reason of terminal overheating (overheating), resulting in that the base station cannot accurately control the temperature rise of the terminal.

### SUMMARY

One objective of embodiments of the present disclosure is to provide a processing method and a device, so as to solve the problem that a base station cannot accurately control temperature rise of a terminal.

In a first aspect, an embodiment of the present disclosure provides a processing method applied to a terminal, including:
sending first information to a Pcell of an MCG or a PScell of an SCG, wherein the first information is used to request to release, add or change the cell of the MCG or SCG, and/or the first information is used to request to change the maximum number of multi-input multi-output layers of the cell of the MCG or SCG or request to change the maximum number of antenna ports; and
receiving second information from the Pcell of the MCG or the PScell of the SCG, releasing, adding or changing the cell of the MCG or SCG according to the second information, and/or changing the maximum number of the multi-input multi-output layers of the cell of the MCG or SCG or changing the maximum number of the antenna ports according to the second information.

In a second aspect, an embodiment of the present disclosure further provides a processing method applied to a network device, including:
receiving first information from a terminal, wherein the first information is used to request to release, add or change a cell of an MCG or an SCG, and/or the first information is used to request to change the maximum number of multi-input multi-output layers of the cell of the MCG or SCG or request to change the maximum number of antenna ports; and
sending second information to the terminal, wherein the second information indicates the terminal to release, add or change the cell of the MCG or SCG, and/or indicates the terminal to change the maximum number of the multi-input multi-output layers of the cell of the MCG or SCG or the maximum number of the antenna ports.

In a third aspect, an embodiment of the present disclosure further provides a processing method applied to a terminal, including:
releasing, adding or changing a cell of an MCG or an SCG;
sending fifth information to a Pcell of the MCG or a PScell of the SCG, wherein the fifth information indicates information that the cell of the MCG or SCG has been released, added or changed;
or
changing the maximum number of multi-input multi-output layers of the cell of the MCG or SCG or the maximum number of antenna ports; and
sending sixth information to the Pcell of the MCG or the PScell of the SCG, wherein the sixth information indicates information of changed maximum number of the multi-input multi-output layers of the cell of the MCG or SCG or changed maximum number of the antenna ports.

In a fourth aspect, an embodiment of the present disclosure further provides a processing method applied to a network device, including:
receiving fifth information from a terminal, wherein the fifth information indicates information that a cell of an MCG or an SCG has been released, added or changed; or
receiving sixth information from the terminal, wherein the sixth information indicates information of changed maximum number of multi-input multi-output layers of the cell of the MCG or SCG, or changed maximum number of antenna ports.

According to a fifth aspect, an embodiment of the present disclosure further provides a terminal, including:
a first sending module, configured to send first information to a Pcell of an MCG or a PScell of an SCG, wherein the first information is used to request to release, add or change the cell of the MCG or SCG, and/or the first information is used to request to change the maximum number of multi-input multi-output layers of the cell of the MCG or SCG or request to change the maximum number of antenna ports; and
a first receiving module, configured to receive second information from the Pcell of the MCG or the PScell of the SCG, and release, add or change the cell of the MCG or SCG according to the second information, and/or change the maximum number of multi-input multi-output layers of the cell of the MCG or SCG or the maximum number of antenna ports.

According to a sixth aspect, the embodiments of the present disclosure further provide a network device, including:
a second receiving module, configured to receive first information from a terminal, wherein the first information is used to request to release, add or change a cell of an MCG or an SCG, and/or the first information is used to request to change the maximum number of multi-input multi-output layers of the cell of the MCG or SCG or request to change the maximum number of antenna ports; and
a fourth sending module, configured to send second information to the terminal, wherein the second information indicates the terminal to release, add or change the cell of the MCG or SCG, and/or to change the maximum number of the multi-input multi-output layers of the cell of the MCG or SCG or the maximum number of the antenna ports.

According to a seventh aspect, embodiments of the present disclosure further provide a terminal, including:
a processing module, configured to release, add or change a cell of an MCG or an SCG, or configured to change the maximum number of multi-input multi-output layers of the cell of the MCG or SCG or the maximum number of antenna ports; and
a fifth sending module, configured to send fifth information to a Pcell of the MCG or a PScell of the SCG, the fifth information indicating information that the cell of the MCG or SCG has been released, added or changed, or configured to send sixth information to the Pcell of the MCG or the PScell of the SCG, the sixth information indicating information of changed maximum number of multi-input multi-output layers of the cell of the MCG or SCG, or changed maximum number of antenna ports.

According to an eighth aspect, embodiments of the present disclosure further provide a network device, including:
a fifth receiving module, configured to receive fifth information from a terminal, the fifth information indicating information that a cell of an MCG or an SCG has been released, added or changed, or configured to receive sixth information from the terminal, the sixth information indicating information of changed maximum number of multi-input multi-output layers of the cell of the MCG or SCG, or changed maximum number of antenna ports.

According to a ninth aspect, embodiments of the present disclosure further provide a terminal, including a processor, a memory, and a program stored in the memory and capable of running on the processor. When the program is executed by the processor, the steps of the foregoing processing method are implemented.

According to a tenth aspect, embodiments of the present disclosure further provide a network device, including a processor, a memory, and a program stored in the memory and capable of running on the processor. When the program is executed by the processor, the steps of the foregoing processing method are implemented.

According to an eleventh aspect, embodiments of the present disclosure further provide a computer readable storage medium. The computer readable storage medium stores a computer program; and when the computer program is executed by a processor, the steps of the foregoing processing method are implemented.

In the embodiments of the present disclosure, the network side may determine whether MCG or SCG causes the temperature rise of the terminal, according to the information reported by the terminal, that is, the network side may determine which cell of the MCG or SCG causes the temperature rise, or determine which cell of the MCG or SCG transmits or receives excessive antennas to cause the temperature rise of the terminal, so that the network side may control the temperature rise of the terminal more accurately.

### BRIEF DESCRIPTION OF DRAWINGS

It becomes clear for those of ordinary skill in the art to learn various other advantages and benefits by reading detailed description of the following optional implementation manners. Accompanying drawings are merely used for showing the optional implementations, and are not considered as a limitation on the present disclosure. Moreover, in all accompanying drawings, a same reference symbol is used to indicate a same part. In the accompanying drawings:
FIG. 1 is a schematic architectural diagram of a wireless communication system according to an embodiment of the present disclosure;
FIG. 2 is a first flowchart of a processing method according to an embodiment of the present disclosure;
FIG. 3 is a second flowchart of a processing method according to an embodiment of the present disclosure;
FIG. 4 is a first flowchart of a processing method according to an embodiment of the present disclosure;
FIG. 5 is a second flowchart of a processing method according to an embodiment of the present disclosure;
FIG. 6 is a flowchart of cell release according to an embodiment of the present disclosure;
FIG. 7 is a flowchart of changing the maximum number of multi-input multi-output layers of a cell of an MCG or an SCG or the maximum number of antenna ports according to an embodiment of the present disclosure;
FIG. 8 is a flowchart of informing an MCG or an SCG after a terminal releases a cell according to an embodiment of the present disclosure;
FIG. 9 is a flowchart of informing an MCG or an SCG after changing the maximum number of multi-input multi-output layers of a cell of the MCG or SCG or the maximum number of antenna ports according to an embodiment of the present disclosure;
FIG. 10 is a first schematic diagram of a terminal according to an embodiment of the present disclosure; and
FIG. 11 is a first schematic diagram of a network device according to an embodiment of the present disclosure;
FIG. 12 is a second schematic diagram of a terminal according to an embodiment of the present disclosure;
FIG. 13 is a second schematic diagram of a network device according to an embodiment of the present disclosure;
FIG. 14 is a third schematic diagram of a terminal according to an embodiment of the present disclosure; and
FIG. 15 is a third schematic diagram of a network device according to an embodiment of the present disclosure.

### DETAILED DESCRIPTION OF EMBODIMENTS

The technical solutions in the embodiments of the present disclosure are described below clearly and completely with reference to the accompanying drawings in the embodiments of the present disclosure. Apparently, the described embodiments are some rather than all of the embodiments of the present disclosure. All other embodiments obtained by a person of ordinary skill in the art based on the embodiments of the present disclosure without creative efforts shall fall within the protection scope of the present disclosure.

The term "include" and any other variants in this specification and claims of the present application are intended to cover a non-exclusive inclusion, for example, a process, method, system, product, or device that includes a list of steps or units is not necessarily limited to those expressly listed steps or units, but may include other steps or units not expressly listed or inherent to such a process, method, product, or device. In addition, "and/or" used in this specification and claims means at least one of the connected objects. For example, A and/or B indicates the following three cases: Only A exists, only B exists, and both A and B exist.

In the embodiments of the present disclosure, the word such as "exemplary" or "example" is used to represent giving an example, an illustration, or a description. Any embodiment or design scheme described as an "exemplary" or "example" in the embodiments of the present disclosure should not be explained as being more preferred or having more advantages than another embodiment or design scheme. Exactly, use of the term "exemplary" or "for example" is intended to present a related concept in a specific manner.

The technology described in this specification is not limited to a long term evolution (Long Time Evolution, LTE)/LTE-advanced (LTE-Advanced, LTE-A) system, and may also be used in various wireless communication systems such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems.

The terms "system" and "network" are usually used interchangeably. A CDMA system may implement radio technologies such as CDMA2000, universal terrestrial radio access (Universal Terrestrial Radio Access, UTRA) and the like. UTRA includes wideband CDMA (Wideband Code Division Multiple Access, WCDMA) and other CDMA variants. A TDMA system may implement radio technologies such as a global system for mobile communication (Global System for Mobile Communication, GSM) and the like. The OFDMA system may implement radio technologies such as ultra mobile broadband (Ultra Mobile Broadband, UMB), evolution-UTRA (Evolution-UTRA, E-UTRA), IEEE 802.11 (Wireless Fidelity, wireless fidelity (Wi-Fi)), IEEE 802.16 (worldwide interoperability for microwave access (Worldwide Interoperability for Microwave Access, WiMAX)), IEEE 802.20, Flash-OFDM and the like. UTRA and E-UTRA are parts of a universal mobile telecommunications system (Universal Mobile Telecommunications System, UMTS). LTE and more advanced LTE (such as LTE-A) are new UMTS versions that use E-UTRA. UTRA, E-UTRA, UMTS, LTE, LTE-A and GSM are described in documents from an organization named "3rd generation partnership project (3rd Generation Partnership Project, 3GPP)". CDMA2000 and UMB are described in a document from an origination named "3rd generation partnership project 2" (3GPP2). The technology described herein may be used in the above-mentioned systems and radio technologies as well as other systems and radio technologies.

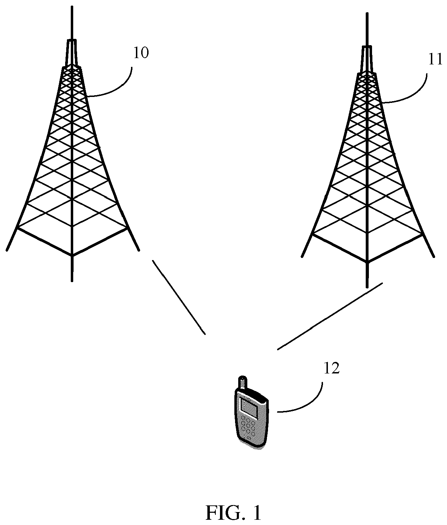

The embodiments of the present disclosure are described below with reference to the accompanying drawings. The processing method and the device provided by the embodiments of the present disclosure may be applied to a wireless communication system. Referring to FIG. 1, it is a schematic architectural diagram of a wireless communication system according to an embodiment of the present disclosure. As shown in FIG. 1, the wireless communication system may include: a network device 10, a network device 11 and a terminal 12. The terminal 12 may be denoted as UE12, and the terminal 12 may communicate (transmit signaling or transmit data) with the network device 10 and the network device 11. In a practical application, a connection between the foregoing various devices may be a wireless connection. A solid line is used in FIG. 1 for easy and intuitive presentation of a connection relationship between the various devices.

The network device 10 and the network device 11 provided in the embodiments of the present disclosure may be base stations, and the base station may be a generally used base station, or may be an evolved node base station (evolved node base station, eNB), or may be a device such as a network device (for example, a next generation node base station (next generation node base station, gNB) or a transmission and reception point (transmission and reception point, TRP)) in a 5G system.

The terminal 12 provided by the embodiment of the present disclosure may be a mobile phone, a tablet personal computer, a notebook computer, an ultra-mobile personal computer (Ultra-Mobile Personal Computer, UMPC), a netbook or personal digital assistant (Personal Digital Assistant, PDA), a mobile Internet device (Mobile Internet Device, MID), a wearable device (Wearable Device) or a vehicle-mounted device.

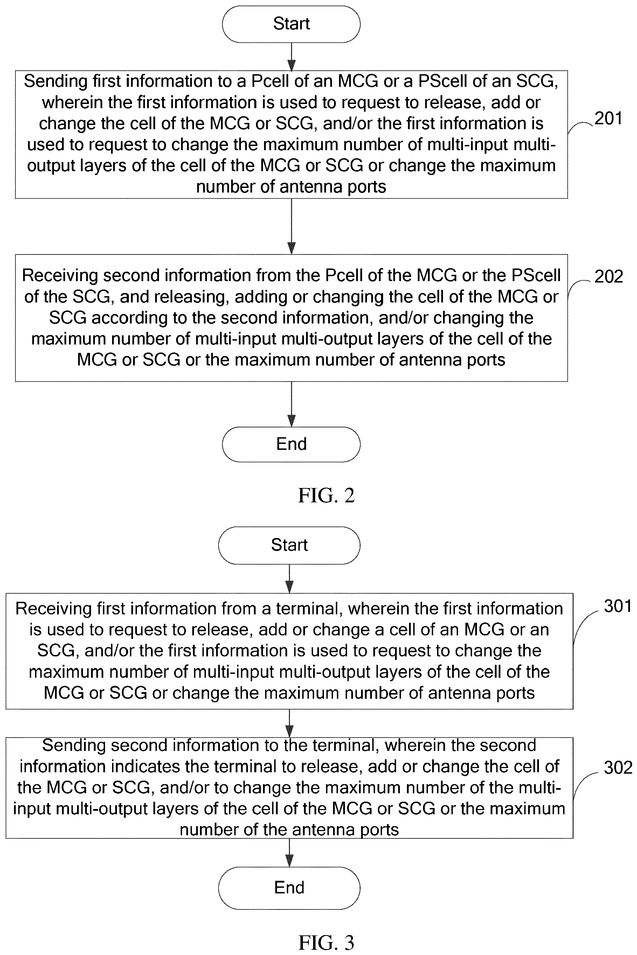

Referring to FIG. 2, the embodiment of the present disclosure provides a processing method. The method is performed by a terminal, and includes: step 201 and step 202.

Step 201: sending first information to a primary cell (Primary cell, Pcell) OF a master cell group (Master Cell Group, MCG) or a primary secondary cell (Primary Secondary Cell, PScell) of a secondary cell group (Secondary Cell Group, SCG), wherein the first information is used to request to release, add or change the cell of the MCG or SCG, and/or the first information is used to request to change the maximum number of multi-input multi-output layers (MIMO layers) of the cell of the MCG or SCG or the maximum number of antenna ports (antenna ports).

Optionally, the cell of the MCG includes one or more of the following: (1) all cells of the MCG; (2) part of cells of the MCG; (3) cells configured by all frequencies of the MCG; and (4) cells configured by part of frequencies of the MCG.

Optionally, the cell of the SCG includes one or more of the following: (1) all cells of the SCG; (2) part of cells of the SCG; (3) cells configured by all frequencies of the SCG; and (4) cells configured by part of frequencies of the SCG.

Frequencies in the specification include: bands (bands) or band combinations (band combinations).

Exemplarily, when it may be determined that the temperature rise of the terminal is caused by the MCG or SCG, the terminal may request the network side to release the cell of the MCG or SCG, or change the maximum number of multi-input multi-output layers of the cell of the MCG or SCG, or the maximum number of antenna ports. For example, the terminal requests the network side to configure or activate some cells or turn off of a receiving antenna or sending antenna of some cells, so that the network side may determine which cells of the MCG or SCG to cause the temperature rise of the terminal based on the information reported by the terminal, or the network side may determine which cells of the MCG or SCG have excessive receiving antennas or sending antennas to cause the temperature rise of the terminal based on the information reported by the terminal.

Step 202: receiving second information from the Pcell of the MCG or the PScell of the SCG, and releasing, adding or changing the cell of the MCG or SCG according to the second information, and/or changing the maximum number of multi-input multi-output layers of the cell of the MCG or SCG or the maximum number of antenna ports according to the second information.

In some implementation manners, after releasing, adding or changing the cell of the MCG or SCG according to the second information, the method further includes: sending third information to the Pcell of the MCG or the PScell of the SCG, wherein the third information indicates information that the cell of the MCG or SCG has been released, added or changed.

In some implementation manners, the third information includes one or more of the following:
(1) information that all cells of the MCG have been released, added or changed;
(2) information that part of cells of the MCG have been released, added or changed;
(3) information that cells configured by all frequencies (frequency) of the MCG have been released, added or changed;
(4) information that cells configured by part of frequencies of the MCG have been released, added or changed;
(5) information that all cells of the SCG have been released, added or changed;
(6) information that part of cells of the SCG have been released, added or changed;
(7) information that cells configured by all frequencies of the SCG have been released, added or changed; and
(8) information that cells configured by part of frequencies of the SCG have been released, added or changed.

In some implementation manners, after changing the maximum number of the multi-input multi-output layers of the cell of the MCG or SCG or changing the maximum number of the antenna ports according to the second information, the method further includes:
sending fourth information to the Pcell of the MCG or the PScell of the SCG, wherein the fourth information indicates information that the maximum number of uplink or downlink multi-input multi-output layers of the cell of the MCG or SCG, or the maximum number of antenna ports is changed.

In some implementation manners, the fourth information includes one or more of the following:
(1) the changed maximum number of uplink or downlink multi-input multi-output layers of all cells of the MCG, or the changed maximum number of antenna ports;
(2) the changed maximum number of uplink or downlink multi-input multi-output layers of part of cells of the MCG, or the changed maximum number of antenna ports;
(3) the changed maximum number of uplink or downlink multi-input multi-output layers of all cells of the SCG, or the changed maximum number of antenna ports; and
(4) the changed maximum number of uplink or downlink multi-input multi-output layers of part of cells of the SCG, or the changed maximum number of antenna ports.

In some implementation manners, the first information is used to request to release, add or change the cell of the MCG or SCG, and includes one or more of the following:
(1) the first information is used to request to release, add or change all cells of the MCG;
(2) the first information is used to request to release, add or change part of cells of the MCG;
(3) the first information is used to request to release, add or change cells configured by all frequencies of the MCG;
(4) the first information is used to request to release, add or change cells configured by part of frequencies of the MCG;
(5) the first information is used to request to release, add or change all cells of the SCG;
(6) the first information is used to request to release, add or change part of cells of the SCG;
(7) the first information is used to request to release, add or change cells configured by all frequencies of the SCG; and
(8) the first information is used to request to release, add or change cells configured by part of frequencies of the SCG.

In some implementation manners, the first information is used to request to change the maximum number of multi-input multi-output layers of the cell of the MCG or SCG, or the maximum number of antenna ports, and includes one or more of the following:
(1) the first information is used to request to change the maximum number of uplink or downlink multi-input multi-output layers of all cells of the MCG, or the maximum number of antenna ports;
(2) the first information is used to request to change the maximum number of uplink or downlink multi-input multi-output layers of part of cells of the MCG, or the maximum number of antenna ports;
(3) the first information is used to request to change the maximum number of uplink or downlink multi-input multi-output layers of all cells of the SCG, or the maximum number of antenna ports; and
(4) the first information is used to request to change the maximum number of uplink or downlink multi-input multi-output layers of part of cells of the SCG, or the maximum number of antenna ports.

In some implementation manners, the first information, the second information, the third information or the fourth information is a radio resource control (Radio Resource Control, RRC) signaling (such as overheating assistant information (overheating assistant information)), or a medium access control control element (Medium Access Control Control Element, MAC CE).

In some implementation manners, a dual-connectivity scenario applicable to the MCG or SCG includes any one of the following:
(1) a dual-connectivity (Dual-Connectivity, DC) (EN-DC) scenario of a fourth generation (Fourth generation , 4G) radio access network and a fifth generation (5G) new radio (New Radio, NR);
(2) a dual-connectivity (NE-DC) scenario of the 5GNR and the 4G radio access network; and
(3) a dual-connectivity (NR-DC) scenario of the 5GNR.

In the embodiments of the present disclosure, the network side may determine whether MCG or SCG causes the temperature rise of the terminal according to the information reported by the terminal, that is, the network side may determine which cell of the MCG or SCG causes the temperature rise, or determine which cell of the MCG or SCG transmits or receives excessive antennas to cause the temperature rise of the terminal, so that the network side may control the temperature rise of the terminal more accurately.

Referring to FIG. 3, the embodiment of the present disclosure provides a processing method. The method may be performed by a network device of the Pcell of the MCG, or a network device of the PScell of the SCG, and includes: step 301 and step 302.

Step 301: receiving first information from the terminal, wherein the first information is used to request to release, add or change the cell of the MCG or SCG, and/or the first information is used to request to change the maximum number of multi-input multi-output layers of the cell of the MCG or SCG or request to change the maximum number of antenna ports.

Optionally, the cell of the MCG includes one or more of the following: (1) all cells of the MCG; (2) part of cells of the MCG; (3) cells configured by all frequencies of the MCG; and (4) cells configured by part of frequencies of the MCG.

Optionally, the cell of the SCG includes one or more of the following: (1) all cells of the SCG; (2) part of cells of the SCG; (3) cells configured by all frequencies of the SCG; and (4) cells configured by part of frequencies of the SCG.

Step 302: sending second information to the terminal, wherein the second information indicates the terminal to release, add or change the cell of the MCG or SCG, and/or to change the maximum number of multi-input multi-output layers of the cell of the MCG or SCG, or the maximum number of antenna ports.

In some implementation manners, after sending the second information to the terminal, the method further includes:
receiving third information from the terminal, wherein the third information indicates information that the cell of the MCG or SCG has been released, added or changed.

In some implementation manners, the third information includes one or more of the following:
(1) information that all cells of the MCG have been released, added or changed;
(2) information that part of cells of the MCG have been released, added or changed;
(3) information that cells configured by all frequencies of the MCG have been released, added or changed;
(4) information that cells configured by part of frequencies of the MCG have been released, added or changed;
(5) information that all cells of the SCG have been released, added or changed;
(6) information that part of cells of the SCG have been released, added or changed;
(7) information that cells configured by all frequencies of the SCG have been released, added or changed; and
(8) information that cells configured by part of frequencies of the SCG have been released, added or changed.

In some implementation manners, after sending the second information to the terminal, the method further includes:
receiving fourth information from the terminal, wherein the fourth information indicates information of changed maximum number of uplink or downlink multi-input multi-output layers of the cell of the MCG or SCG, or changed maximum number of antenna ports.

In some implementation manners, the fourth information includes one or more of the following:
(1) the changed maximum number of uplink or downlink multi-input multi-output layers of all cells of the MCG, or the changed maximum number of antenna ports;
(2) the changed maximum number of uplink or downlink multi-input multi-output layers of part of cells of the MCG, or the changed maximum number of antenna ports;
(3) the changed maximum number of uplink or downlink multi-input multi-output layers of all cells of the SCG, or the changed maximum number of antenna ports; and
(4) the changed maximum number of uplink or downlink multi-input multi-output layers of part of cells of the SCG, or the changed maximum number of antenna ports.

In some implementation manners, the first information is used to request to release, add or change the cell of the MCG or SCG, and includes one or more of the following:
(1) the first information is used to request to release, add or change all cells of the MCG;
(2) the first information is used to request to release, add or change part of cells of the MCG;
(3) the first information is used to request to release, add or change cells configured by all frequencies of the MCG;
(4) the first information is used to request to release, add or change cells configured by part of frequencies of the MCG;
(5) the first information is used to request to release, add or change all cells of the SCG;
(6) the first information is used to request to release, add or change part of cells of the SCG;
(7) the first information is used to request to release, add or change cells configured by all frequencies of the SCG; and
(8) the first information is used to request to release, add or change cells configured by part of frequencies of the SCG.

In some implementation manners, the first information is used to request to change the maximum number of multi-input multi-output layers of the cell of the MCG or SCG, or the maximum number of antenna ports, and includes one or more of the following:
(1) the first information is used to request to change the maximum number of uplink or downlink multi-input multi-output layers of all cells of the MCG, or the maximum number of antenna ports;
(2) the first information is used to request to change the maximum number of uplink or downlink multi-input multi-output layers of part of cells of the MCG, or the maximum number of antenna ports;
(3) the first information is used to request to change the maximum number of uplink or downlink multi-input multi-output layers of all cells of the SCG, or the maximum number of antenna ports; and
(4) the first information is used to request to change the maximum number of uplink or downlink multi-input multi-output layers of part of cells of the SCG, or the maximum number of antenna ports.

In some implementation manners, the first information, the second information, the third information or the fourth information is an RRC signaling (such as overheating assistant information), or an MAC CE.

In some implementation manners, a dual-connectivity scenario applicable to the MCG or SCG includes any one of the following:
(1) an EN-DC scenario;
(2) an NE-DC scenario; and
(3) an NR-DC scenario.

In the embodiments of the present disclosure, the network side may determine whether MCG or SCG causes the temperature rise of the terminal according to the information reported by the terminal, that is, the network side may determine which cell of the MCG or SCG causes the temperature rise, or determine which cell of the MCG or SCG transmits or receives excessive antennas to cause the temperature rise of the terminal, so that the network side may configure or activate some cells or turn off receiving antennas or sending antennas of some cells, and the network side may control the temperature rise of the terminal more accurately.

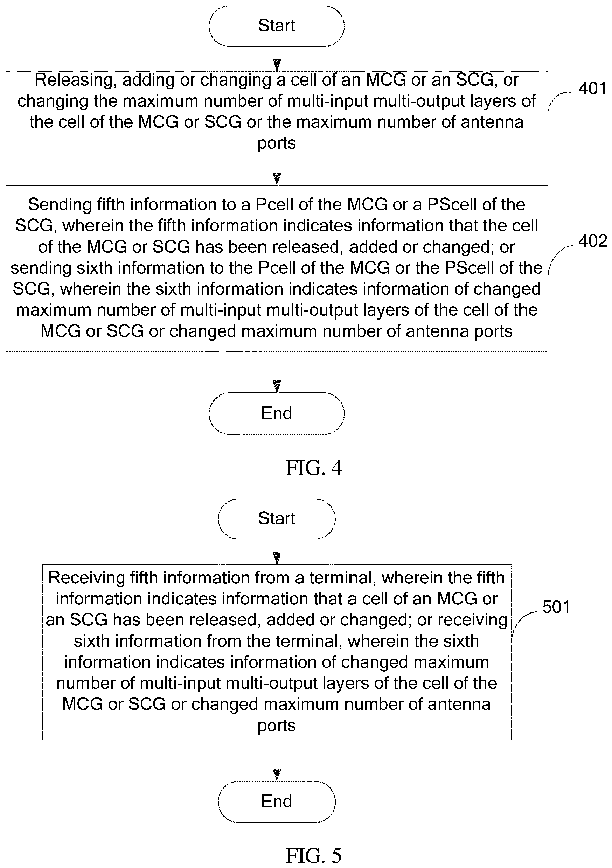

Referring to FIG. 4, the embodiment of the present disclosure further provides a processing method. The method is performed by a terminal, and includes: step 401 and step 402.

Step 401: releasing, adding or changing a cell of an MCG or an SCG, or changing the maximum number of multi-input multi-output layers of the cell of the MCG or SCG or the maximum number of antenna ports.

Optionally, the cell of the MCG includes one or more of the following: (1) all cells of the MCG; (2) part of cells of the MCG; (3) cells configured by all frequencies of the MCG; and (4) cells configured by part of frequencies of the MCG.

Optionally, the cell of the SCG includes one or more of the following: (1) all cells of the SCG; (2) part of cells of the SCG; (3) cells configured by all frequencies of the SCG; and (4) cells configured by part of frequencies of the SCG.

Step 402: sending fifth information to a Pcell of the MCG or a PScell of the SCG, wherein the fifth information indicates information that the cell of the MCG or SCG has been released, added or changed, or sending sixth information to the Pcell of the MCG or the PScell of the SCG, wherein the sixth information indicates information of changed maximum number of multi-input multi-output layers of the cell of the MCG or SCG or the maximum number of antenna ports.

In some implementation manners, the step of releasing, adding or changing a cell of an MCG or an SCG includes one or more of the following:
(1) releasing, adding or changing all cells of the MCG;
(2) releasing, adding or changing part of cells of the MCG;
(3) releasing, adding or changing cells configured by all frequencies of the MCG;
(4) releasing, adding or changing cells configured by part of frequencies of the MCG;
(5) releasing, adding or changing all cells of the SCG;
(6) releasing, adding or changing part of cells of the SCG;
(7) releasing, adding or changing cells configured by all frequencies of the SCG; and
(8) releasing, adding or changing cells configured by part of frequencies of the SCG.

In some implementation manners, the fifth information includes one or more of the following:
(1) information that all cells of the MCG have been released, added or changed;
(2) information that part of cells of the MCG have been released, added or changed;
(3) information that cells configured by all frequencies of the MCG have been released, added or changed;
(4) information that cells configured by part of frequencies of the MCG have been released, added or changed;
(5) information that all cells of the SCG have been released, added or changed;
(6) information that part of cells of the SCG have been released, added or changed;
(7) information that cells configured by all frequencies of the SCG have been released, added or changed; and
(8) information that cells configured by part of frequencies of the SCG have been released, added or changed.

In some implementation manners, the sixth information includes one or more of the following:
(1) the changed maximum number of uplink or downlink multi-input multi-output layers of all cells of the MCG, or the changed maximum number of antenna ports;
(2) the changed maximum number of uplink or downlink multi-input multi-output layers of part of cells of the MCG, or the changed maximum number of antenna ports;
(3) the changed maximum number of uplink or downlink multi-input multi-output layers of all cells of the SCG, or the changed maximum number of antenna ports; and
(4) the changed maximum number of uplink or downlink multi-input multi-output layers of part of cells of the SCG, or the changed maximum number of antenna ports.

In some implementation manners, the fifth information or the sixth information is an RRC signaling or an MAC CE.

In the embodiments of the present disclosure, the terminal may configure or activate one or more cells, and/or the terminal may turn off receiving antennas or sending antennas of some cells, and then the network side is informed, so that the network side may determine which cell of the MCG or SCG to cause the temperature rise, or determine which cell of the MCG or SCG transmits excessive receiving and sending antennas to cause the temperature rise of the terminal, so that the network side may control the temperature rise of the terminal more accurately.

Referring to FIG. 5, the embodiment of the present disclosure provides a processing method. The method may be performed by a network device of the Pcell of the MCG, or a network device of the PScell of the SCG, and includes: step 501.

Step 501: receiving fifth information from a terminal, wherein the fifth information indicates information that a cell of an MCG or an SCG has been released, added or changed, or receiving sixth information from the terminal, wherein the sixth information indicates information of changed maximum number of multi-input multi-output layers of the cell of the MCG or SCG, or changed maximum number of antenna ports.

Optionally, the cell of the MCG includes one or more of the following: (1) all cells of the MCG; (2) part of cells of the MCG; (3) cells configured by all frequencies of the MCG; and (4) cells configured by part of frequencies of the MCG.

Optionally, the cell of the SCG includes one or more of the following: (1) all cells of the SCG; (2) part of cells of the SCG; (3) cells configured by all frequencies of the SCG; and (4) cells configured by part of frequencies of the SCG.

In some implementation manners, the fifth information includes one or more of the following:
(1) information that all cells of the MCG have been released, added or changed;
(2) information that part of cells of the MCG have been released, added or changed;
(3) information that cells configured by all frequencies of the MCG have been released, added or changed;
(4) information that cells configured by part of frequencies of the MCG have been released, added or changed;
(5) information that all cells of the SCG have been released, added or changed;
(6) information that part of cells of the SCG have been released, added or changed;
(7) information that cells configured by all frequencies of the SCG have been released, added or changed; and
(8) information that cells configured by part of frequencies of the SCG have been released, added or changed.

In some implementation manners, the sixth information includes one or more of the following:
(1) the changed maximum number of uplink or downlink multi-input multi-output layers of all cells of the MCG, or the changed maximum number of antenna ports;
(2) the changed maximum number of uplink or downlink multi-input multi-output layers of part of cells of the MCG, or the changed maximum number of antenna ports;
(3) the changed maximum number of uplink or downlink multi-input multi-output layers of all cells of the SCG, or the changed maximum number of antenna ports; and
(4) the changed maximum number of uplink or downlink multi-input multi-output layers of part of cells of the SCG, or the changed maximum number of antenna ports.

In some implementation manners, the fifth information or the sixth information is an RRC signaling or an MAC CE.

In the embodiments of the present disclosure, the network side may determine whether MCG or SCG causes the temperature rise of the terminal according to the information reported by the terminal, that is, the network side may determine which cell of the MCG or SCG causes the temperature rise, or determine which cell of the MCG or SCG transmits or receives excessive antennas to cause the temperature rise of the terminal, so that the network side may control the temperature rise of the terminal more accurately.

### Embodiment 1:

UE requests to release some cells (cell) from a Pcell of an MCG or a PScell of an SCG, which is applicable to any one of the following scenarios:
(1) an EN-DC scenario, referring to dual-connectivity of a 4G radio access network and a 5GNR, wherein long term evolution (Long Term Evolution, LTE) or NR in the dual-connectivity may be carrier aggregation (Carrier Aggregation, CA);
(2) an NE-DC scenario, referring to dual-connectivity of the 5GNR and the 4G radio access network, wherein the LTE or NR in the dual-connectivity scenario may be the CA; and
(3) an NR-DC scenario, wherein the NR in the dual-connectivity scenario may be the CA.

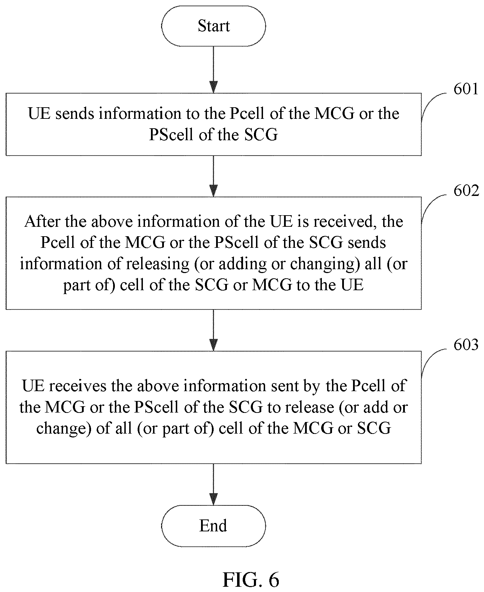

### Referring to FIG. 6, the specific steps are as follows:

Step 601: UE sends information to the Pcell of the MCG or the PScell of the SCG.

Optionally, the implementation manner of the step 601 includes any one of the following:
a) UE sends information to the Pcell of the MCG or the PScell of the SCG and requests to release (or add or change) all cells of the SCG;
b) UE sends information to the Pcell of the MCG or the PScell of the SCG and requests to release (or add or change) part of cells of the SCG, for example, the PScell of the SCG is remained, but the PScell is configured or activated;
c) UE sends information to the Pcell of the MCG or the PScell of the SCG and requests to release (or add or change) cells configured by all frequencies (frequency) of the SCG;
d) UE sends information to the Pcell of the MCG or the PScell of the SCG and requests to release (or add or change) cells configured by part of frequencies of the SCG;
e) UE sends information to the Pcell of the MCG or the PScell of the SCG and requests to release (or add or change) all (or part of) cells of the MCG; and
f) UE sends information to the Pcell of the MCG or the PScell of the SCG, and requests to release (or add or change) cells configured by all (or part of) frequencies of the MCG.

Optionally, the above information may be an RRC signaling or an MAC CE, wherein the RRC signaling may be overheating assistant information.

Step 602: after the above information of the UE is received, the Pcell of the MCG or the PScell of the SCG sends information of releasing (or adding or changing) all (or part of) cells of the SCG or MCG to the UE.

Step 603: UE receives the above information sent by the Pcell of the MCG or the PScell of the SCG to release (or add or change) of all (or part of) cells of the MCG or SCG.

### Embodiment 2:

UE requests to change the maximum number of multi-input multi-output layers (MIMO layers) of some cells from the Pcell of the MCG or the PScell of the SCG, or the maximum number of antenna ports (antenna ports), which is applicable to any one of the following scenarios:
(1) an EN-DC scenario;
(2) an NE-DC scenario; and
(3) an NR-DC scenario.

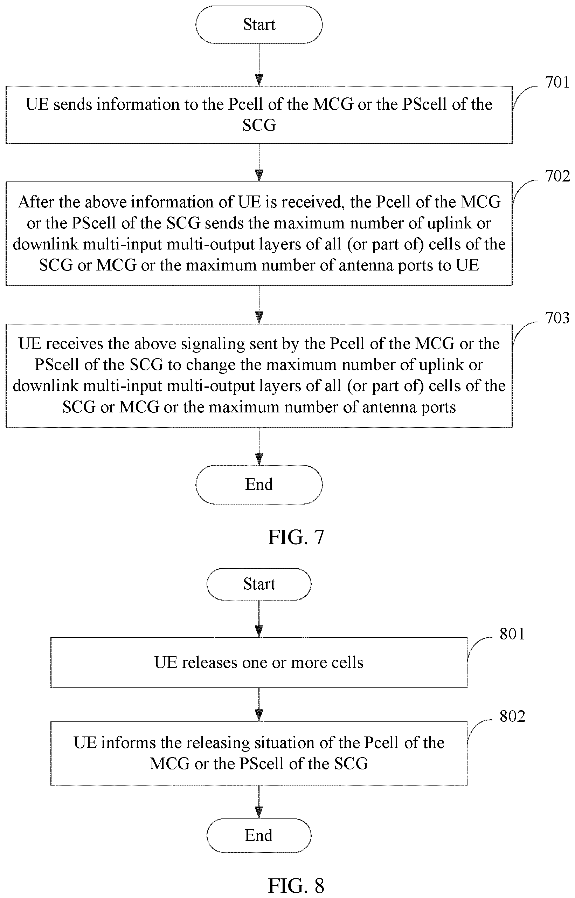

### Referring to FIG. 7, the specific steps are as follows:

Step 701: UE sends information to the Pcell of the MCG or the PScell of the SCG.

Optionally, UE sends information to the Pcell of the MCG or the PScell of the SCG and requests to change the uplink or downlink number of MIMO layers/antenna ports of all (part of) cells of the MCG, and/or the maximum number of uplink or downlink multi-input multi-output layers of all (part of) cells of the SCG or the maximum number of antenna ports.

Optionally, the above information may be an RRC signaling (such as overheating assistant information) or an MAC CE.

Step 702: after the above information of UE is received, the Pcell of the MCG or the PScell of the SCG sends the maximum number of uplink or downlink multi-input multi-output layers of all (or part of) cells of the SCG or MCG or the maximum number of antenna ports to UE.

Step 703: UE receives the above signaling sent by the Pcell of the MCG or the PScell of the SCG to change the maximum number of uplink or downlink multi-input multi-output layers of all (or part of) cells of the SCG or MCG or the maximum number of antenna ports.

### Embodiment 3:

UE releases some cells and then informs the Pcell of the MCG or the PScell of the SCG, which is applicable to any one of the following scenarios:
(1) an EN-DC scenario;
(2) an NE-DC scenario; and
(3) an NR-DC scenario.

### Referring to FIG. 8, the specific steps are as follows:

Step 801: UE releases one or more cells.

Optionally, the implementation manner of the step 801 is any one of the following:
a) releasing (or adding or changing) all cells of the SCG;
b) releasing (or adding or changing) part of cells of the SCG;
c) releasing (or adding or changing) cells configured by all frequencies of the SCG;
d) releasing (or adding or changing) cells configured by part of frequencies of the SCG;
e) releasing (or adding or changing) all cells of the MCG;
f) releasing (or adding or changing) part of cells of the MCG;
g) releasing (or adding or changing) cells configured by all frequencies of the MCG; and
h) releasing (or adding or changing) cells configured by part of frequencies of the MCG.

Step 802: UE informs the releasing situation of the Pcell of the MCG or the PScell of the SCG.

Optionally, the implementation manner of the step 802 is any one of the following:
a) UE informs the Pcell of the MCG or the PScell of the SCG that all cells of the SCG have been released (or added or changed);
b) UE informs the Pcell of the MCG or the PScell of the SCG that part of cells have been released (or added or changed);
c) UE informs the Pcell of the MCG or the PScell of the SCG that cells configured by all frequencies of the SCG have been released (or added or changed);
d) UE informs the Pcell of the MCG or the PScell of the SCG that cells configured by part of frequencies of the SCG have been released (or added or changed);
e) UE informs the Pcell of the MCG or the PScell of the SCG that all (or part of) cells of the MCG have been released (or added or changed); and
f) UE informs the Pcell of the MCG or the PScell of the SCG that cells configured by all (or part of) frequencies of the MCG have been released (or added or changed).

Optionally, the information informed by the UE may be an RRC signaling (such as overheating assistant information) or an MAC CE.

### Embodiment 4:

UE changes the maximum number of multi-input multi-output layers of some cells or the maximum number of antenna ports and then informs the Pcell of the MCG or the PScell of the SCG, which is applicable to any one of the following scenarios:
(1) an EN-DC scenario;
(2) an NE-DC scenario; and
(3) an NR-DC scenario.

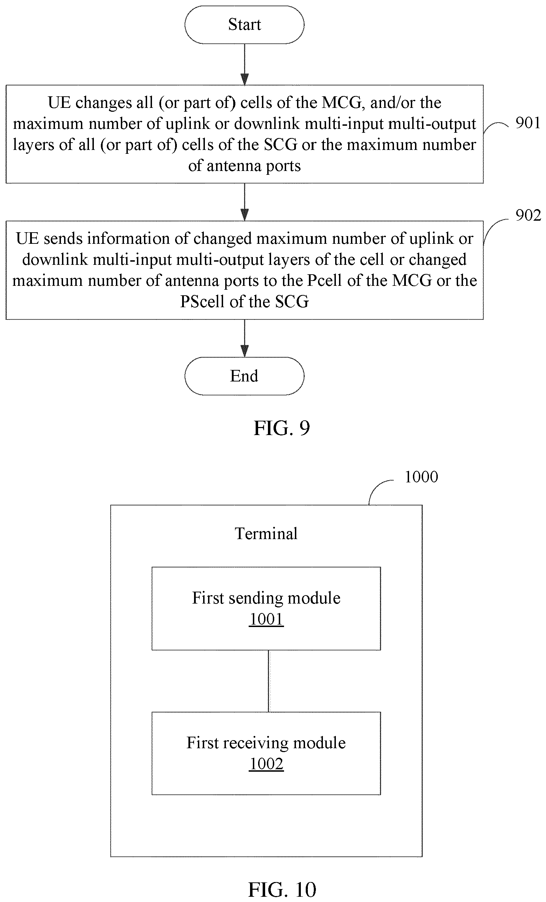

### Referring to FIG. 9, the specific steps are as follows:

Step 901: UE changes all (or part of) cells of the MCG, and/or the maximum number of uplink or downlink multi-input multi-output layers of all (or part of) cells of the SCG or the maximum number of antenna ports.

Step 902: UE sends information of changed maximum number of uplink or downlink multi-input multi-output layers of the cell or changed maximum number of antenna ports to the Pcell of the MCG or the PScell of the SCG.

Optionally, UE informs the Pcell of the MCG or the PScell of the SCG that the UE has changed the maximum number of uplink or downlink multi-input multi-output layers of all (or part of) cells of the MCG or the maximum number of antenna ports, and/or the maximum number of uplink or downlink multi-input multi-output layers of all (or part of) cells of the SCG or the maximum number of antenna ports.

Optionally, the information informed by the UE may be an RRC signaling (such as overheating assistant information) or an MAC CE.

The embodiment of the present disclosure further provides a terminal. A problem solving principle of the terminal is similar to that of the processing method in the embodiments of the present disclosure. Therefore, for implementation of the terminal, reference may be made to the implementation of the method, and details are not repeated again.

Referring to FIG. 10, an embodiment of the present disclosure further provides a terminal. The terminal 1000 includes:
a first sending module 1001, configured to send first information to a Pcell of an MCG or a PScell of an SCG, wherein the first information is used to request to release, add or change the cell of the MCG or SCG, and/or the first information is used to request to change the maximum number of multi-input multi-output layers of the cell of the MCG or SCG or request to change the maximum number of antenna ports; and
a first receiving module 1002, configured to receive second information from the Pcell of the MCG or the PScell of the SCG, and release, add or change the cell of the MCG or SCG according to the second information, and/or change the maximum number of multi-input multi-output layers of the cell of the MCG or SCG or the maximum number of antenna ports.

In some implementation manners, the terminal 1000 further includes:
a second sending module, configured to send third information to the Pcell of the MCG or the PScell of the SCG, wherein the third information indicates information that the cell of the MCG or SCG has been released, added or changed.

In some implementation manners, the third information includes one or more of the following:
(1) information that all cells of the MCG have been released, added or changed;
(2) information that part of cells of the MCG have been released, added or changed;
(3) information that cells configured by all frequencies of the MCG have been released, added or changed;
(4) information that cells configured by part of frequencies of the MCG have been released, added or changed;
(5) information that all cells of the SCG have been released, added or changed;
(6) information that part of cells of the SCG have been released, added or changed;
(7) information that cells configured by all frequencies of the SCG have been released, added or changed; and
(8) information that cells configured by part of frequencies of the SCG have been released, added or changed.

The above frequencies include: bands (bands) or band combinations (band combinations).

In some implementation manners, the terminal 1000 further includes:
a third sending module, configured to send fourth information to the Pcell of the MCG or the PScell of the SCG, wherein the fourth information indicates information that the maximum number of uplink or downlink multi-input multi-output layers of the cell of the MCG or SCG, or the maximum number of antenna ports is changed.

In some implementation manners, the fourth information includes one or more of the following:
(1) the changed maximum number of uplink or downlink multi-input multi-output layers of all cells of the MCG, or the changed maximum number of antenna ports;
(2) the changed maximum number of uplink or downlink multi-input multi-output layers of part of cells of the MCG, or the changed maximum number of antenna ports;
(3) the changed maximum number of uplink or downlink multi-input multi-output layers of all cells of the SCG, or the changed maximum number of antenna ports; and
(4) the changed maximum number of uplink or downlink multi-input multi-output layers of part of cells of the SCG, or the changed maximum number of antenna ports.

In some implementation manners, the first information is used to request to release, add or change the cell of the MCG or SCG, and includes one or more of the following:
(1) the first information is used to request to release, add or change all cells of the MCG;
(2) the first information is used to request to release, add or change part of cells of the MCG;
(3) the first information is used to request to release, add or change cells configured by all frequencies of the MCG;
(4) the first information is used to request to release, add or change cells configured by part of frequencies of the MCG;
(5) the first information is used to request to release, add or change all cells of the SCG;
(6) the first information is used to request to release, add or change part of cells of the SCG;
(7) the first information is used to request to release, add or change cells configured by all frequencies of the SCG; and
(8) the first information is used to request to release, add or change cells configured by part of frequencies of the SCG.

In some implementation manners, the first information is used to request to change the maximum number of multi-input multi-output layers of the cell of the MCG or SCG, or the maximum number of antenna ports, and includes one or more of the following:
(1) the first information is used to request to change the maximum number of uplink or downlink multi-input multi-output layers of all cells of the MCG, or the maximum number of antenna ports;
(2) the first information is used to request to change the maximum number of uplink or downlink multi-input multi-output layers of part of cells of the MCG, or the maximum number of antenna ports;
(3) the first information is used to request to change the maximum number of uplink or downlink multi-input multi-output layers of all cells of the SCG, or the maximum number of antenna ports; and
(4) the first information is used to request to change the maximum number of uplink or downlink multi-input multi-output layers of part of cells of the SCG, or the maximum number of antenna ports.

In some implementation manners, the first information, the second information, the third information or the fourth information is an RRC signaling or an MAC CE.

In some implementation manners, a dual-connectivity scenario applicable to the MCG or SCG includes any one of the following:
(1) an EN-DC scenario;
(2) an NE-DC scenario; and
(3) an NR-DC scenario.

The terminal provided in this embodiment of the present disclosure may perform the embodiment shown in FIG. 2. An implementation principle and a technical effect of the terminal are similar to those of the embodiment, and details are not described again in this embodiment.

The embodiment of the present disclosure further provides a network device. The problem solving principle of the network device is similar to the processing method in the embodiment of the present disclosure, so the implementation of the network device may be referred to the implementation of the method, and the repetition will not be elaborated.

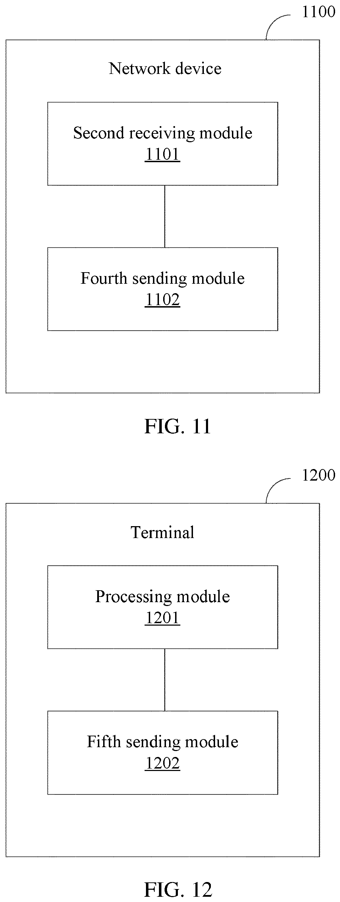

Referring to FIG. 11, an embodiment of the present disclosure further provides a network device. The network device 1100 includes:
a second receiving module 1101, configured to receive first information from a terminal, wherein the first information is used to request to release, add or change a cell of an MCG or an SCG, and/or the first information is used to request to change the maximum number of multi-input multi-output layers of the cell of the MCG or SCG or request to change the maximum number of antenna ports; and
a fourth sending module 1102, configured to send second information to the terminal, wherein the second information indicates the terminal to release, add or change the cell of the MCG or SCG, and/or to change the maximum number of the multi-input multi-output layers of the cell of the MCG or SCG or the maximum number of the antenna ports.

In some implementation manners, the network device 1100 further includes:
a third receiving module, configured to receive third information from the terminal, wherein the third information indicates information that the cell of the MCG or SCG has been released, added or changed.

In some implementation manners, the third information includes one or more of the following:
(1) information that all cells of the MCG have been released, added or changed;
(2) information that part of cells of the MCG have been released, added or changed;
(3) information that cells configured by all frequencies of the MCG have been released, added or changed;
(4) information that cells configured by part of frequencies of the MCG have been released, added or changed;
(5) information that all cells of the SCG have been released, added or changed;
(6) information that part of cells of the SCG have been released, added or changed;
(7) information that cells configured by all frequencies of the SCG have been released, added or changed; and
(8) information that cells configured by part of frequencies of the SCG have been released, added or changed.

In some implementation manners, the network device 1100 further includes:
a fourth receiving module, configured to receive fourth information from the terminal, wherein the fourth information indicates information of changed maximum number of uplink or downlink multi-input multi-output layers of the cell of the MCG or SCG or changed maximum number of antenna ports.

In some implementation manners, the fourth information includes one or more of the following:
(1) the changed maximum number of uplink or downlink multi-input multi-output layers of all cells of the MCG, or the changed maximum number of antenna ports;
(2) the changed maximum number of uplink or downlink multi-input multi-output layers of part of cells of the MCG, or the changed maximum number of antenna ports;
(3) the changed maximum number of uplink or downlink multi-input multi-output layers of all cells of the SCG, or the changed maximum number of antenna ports; and
(4) the changed maximum number of uplink or downlink multi-input multi-output layers of part of cells of the SCG, or the changed maximum number of antenna ports.

In some implementation manners, the first information is used to request to release, add or change the cell of the MCG or SCG, and includes one or more of the following:
(1) the first information is used to request to release, add or change all cells of the MCG;
(2) the first information is used to request to release, add or change part of cells of the MCG;
(3) the first information is used to request to release, add or change cells configured by all frequencies of the MCG;
(4) the first information is used to request to release, add or change cells configured by part of frequencies of the MCG;
(5) the first information is used to request to release, add or change all cells of the SCG;
(6) the first information is used to request to release, add or change part of cells of the SCG;
(7) the first information is used to request to release, add or change cells configured by all frequencies of the SCG; and
(8) the first information is used to request to release, add or change cells configured by part of frequencies of the SCG.

In some implementation manners, the first information is used to request to change the maximum number of multi-input multi-output layers of the cell of the MCG or SCG, or the maximum number of antenna ports, and includes one or more of the following:
(1) the first information is used to request to change the maximum number of uplink or downlink multi-input multi-output layers of all cells of the MCG, or the maximum number of antenna ports;
(2) the first information is used to request to change the maximum number of uplink or downlink multi-input multi-output layers of part of cells of the MCG, or the maximum number of antenna ports;
(3) the first information is used to request to change the maximum number of uplink or downlink multi-input multi-output layers of all cells of the SCG, or the maximum number of antenna ports; and
(4) the first information is used to request to change the maximum number of uplink or downlink multi-input multi-output layers of part of cells of the SCG, or the maximum number of antenna ports.

In some implementation manners, the first information, the second information, the third information or the fourth information is an RRC signaling (such as overheating assistant information), or an MAC CE.

In some implementation manners, a dual-connectivity scenario applicable to the MCG or SCG includes any one of the following:
(1) an EN-DC scenario;
(2) an NE-DC scenario; and
(3) an NR-DC scenario.

The network device provided in this embodiment of the present disclosure may perform the embodiment shown in FIG. 3. An implementation principle and a technical effect of the network device are similar to those of the embodiment, and details are not described again in this embodiment.

The embodiment of the present disclosure further provides a terminal. A problem solving principle of the terminal is similar to that of the processing method in the embodiments of the present disclosure. Therefore, for implementation of the terminal, reference may be made to the implementation of the method, and details are not repeated again.

Referring to FIG. 12, an embodiment of the present disclosure further provides a terminal. The terminal 1200 includes:
a processing module 1201, configured to release, add or change a cell of an MCG or an SCG, or configured to change the maximum number of multi-input multi-output layers of the cell of the MCG or SCG or the maximum number of antenna ports; and
a fifth sending module 1202, configured to send fifth information to a Pcell of the MCG or a PScell of the SCG, the fifth information indicating information that the cell of the MCG or SCG has been released, added or changed, or configured to send sixth information to the Pcell of the MCG or the PScell of the SCG, the sixth information indicating information of changed the maximum number of multi-input multi-output layers of the cell of the MCG or SCG or changed maximum number of antenna ports.

In some implementation manners, the step of releasing, adding or changing a cell of an MCG or an SCG includes one or more of the following:
(1) releasing, adding or changing all cells of the MCG;
(2) releasing, adding or changing part of cells of the MCG;
(3) releasing, adding or changing cells configured by all frequencies of the MCG;
(4) releasing, adding or changing cells configured by part of frequencies of the MCG;
(5) releasing, adding or changing all cells of the SCG;
(6) releasing, adding or changing part of cells of the SCG;
(7) releasing, adding or changing cells configured by all frequencies of the SCG; and
(8) releasing, adding or changing cells configured by part of frequencies of the SCG.

In some implementation manners, the fifth information includes one or more of the following:
(1) information that all cells of the MCG have been released, added or changed;
(2) information that part of cells of the MCG have been released, added or changed;
(3) information that cells configured by all frequencies of the MCG have been released, added or changed;
(4) information that cells configured by part of frequencies of the MCG have been released, added or changed;
(5) information that all cells of the SCG have been released, added or changed;
(6) information that part of cells of the SCG have been released, added or changed;
(7) information that cells configured by all frequencies of the SCG have been released, added or changed; and
(8) information that cells configured by part of frequencies of the SCG have been released, added or changed.

In some implementation manners, the sixth information includes one or more of the following:
(1) the changed maximum number of uplink or downlink multi-input multi-output layers of all cells of the MCG, or the changed maximum number of antenna ports;
(2) the changed maximum number of uplink or downlink multi-input multi-output layers of part of cells of the MCG, or the changed maximum number of antenna ports;
(3) the changed maximum number of uplink or downlink multi-input multi-output layers of all cells of the SCG, or the changed maximum number of antenna ports; and
(4) the changed maximum number of uplink or downlink multi-input multi-output layers of part of cells of the SCG, or the changed maximum number of antenna ports.

In some implementation manners, the fifth information or the sixth information is an RRC signaling or an MAC CE.

The terminal provided in this embodiment of the present disclosure may perform the embodiment shown in FIG. 4. An implementation principle and a technical effect of the terminal are similar to those of the embodiment, and details are not described again in this embodiment.

The embodiment of the present disclosure further provides a network device. The problem solving principle of the network device is similar to the processing method in the embodiment of the present disclosure, so the implementation of the network device may be referred to the implementation of the method, and the repetition will not be elaborated.

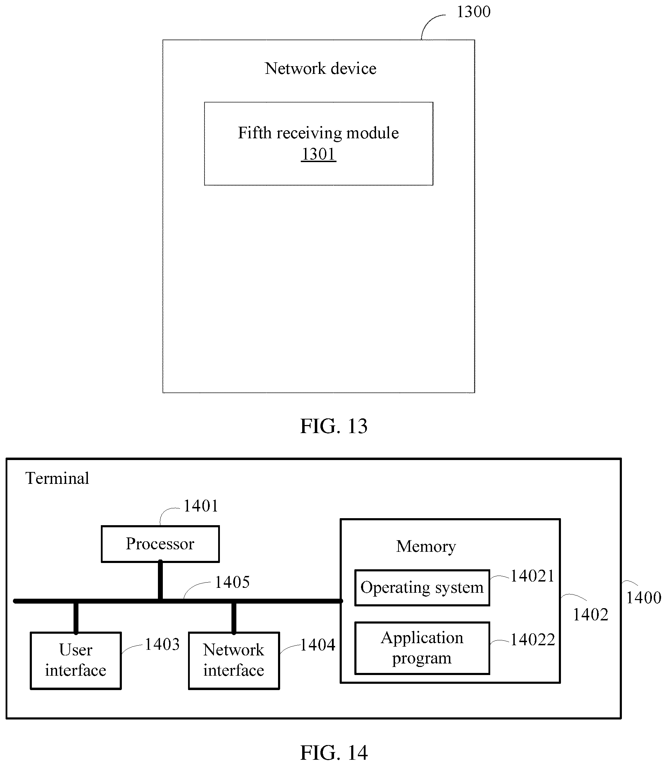

Referring to FIG. 13, an embodiment of the present disclosure further provides a network device. The network device 1300 includes:
a fifth receiving module 1301, configured to receive fifth information from a terminal, wherein the fifth information indicates information that a cell of an MCG or an SCG has been released, added or changed, or configured to receive sixth information from the terminal, wherein the sixth information indicates information of changed maximum number of multi-input multi-output layers of the cell of the MCG or SCG or changed maximum number of antenna ports.

In some implementation manners, the fifth information includes one or more of the following:
(1) information that all cells of the MCG have been released, added or changed;
(2) information that part of cells of the MCG have been released, added or changed;
(3) information that cells configured by all frequencies of the MCG have been released, added or changed;
(4) information that cells configured by part of frequencies of the MCG have been released, added or changed;
(5) information that all cells of the SCG have been released, added or changed;
(6) information that part of cells of the SCG have been released, added or changed;
(7) information that cells configured by all frequencies of the SCG have been released, added or changed; and
(8) information that cells configured by part of frequencies of the SCG have been released, added or changed.

In some implementation manners, the sixth information includes one or more of the following:
(1) the changed maximum number of uplink or downlink multi-input multi-output layers of all cells of the MCG, or the changed maximum number of antenna ports;
(2) the changed maximum number of uplink or downlink multi-input multi-output layers of part of cells of the MCG, or the changed maximum number of antenna ports;
(3) the changed maximum number of uplink or downlink multi-input multi-output layers of all cells of the SCG, or the changed maximum number of antenna ports; and
(4) the changed maximum number of uplink or downlink multi-input multi-output layers of part of cells of the SCG, or the changed maximum number of antenna ports.

In some implementation manners, the fifth information or the sixth information is an RRC signaling or an MAC CE.

The network device provided in this embodiment of the present disclosure may perform the embodiment shown in FIG. 5. An implementation principle and a technical effect of the network device are similar to those of the embodiment, and details are not described again in this embodiment.

As shown in FIG. 14, a terminal 1400 shown in FIG. 14 includes: at least one processor 1401, a memory 1402, at least one network interface 1404, and a user interface 1403. Various components of the terminal 1400 are coupled by using a bus system 1405. It may be understood that the bus system 1405 is used to implement connection communication between these components. In addition to including a data bus, the bus system 1405 further includes a power supply bus, a control bus, and a status signal bus. However, for clear description, various buses are marked as the bus system 1405 in FIG. 14.

The user interface 1403 may include a display, a keyboard, or a clicking device (for example, a mouse, a trackball (trackball)), a touch panel, or a touchscreen.

It may be understood that the memory 1402 in this embodiment of the present disclosure may be a volatile memory or a non-volatile memory, or may include both a volatile memory and a non-volatile memory. The nonvolatile memory may be a read-only memory (Read-only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), used as an external cache. Through exemplary but not limitative description, many forms of RAMs may be used, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data rate SDRAM, DDRSDRAM), an enhanced synchronous dynamic random access memory (Enhanced SDRAM, ESDRAM), a synchlink dynamic random access memory (Synchlink DRAM, SLDRAM), and a direct rambus random access memory (Direct Rambus RAM, DRRAM). The memory 1402 of the system and the method described in the embodiments of the present disclosure is intended to include, but is not limited to, these and any other suitable types of memories.

In some implementations, the memory 1402 stores the following element: an executable module or a data structure, a subset of an executable module or a data structure, or an extended set of an executable module or a data structure: an operating system 14021 and an application program 14022.

The operating system 14021 includes various system programs, such as a framework layer, a core library layer, and a driver layer, and is configured to implement various basic services and process hardware-based tasks. The application program 14022 includes various application programs, for example, a media player (Media Player) and a browser (Browser), and is configured to implement various application services. A program for implementing the method in the embodiments of the present disclosure may be included in the application program 14022.

In one embodiment of the present disclosure, when a program or an instruction stored in the memory 1402 is called, specifically, when a program or an instruction stored in the application program 14022 is executed, the following steps of the method in FIG. 2 or FIG. 4 are implemented.

The terminal provided in this embodiment of the present disclosure may perform the foregoing measuring and reporting method embodiment. An implementation principle and a technical effect of the terminal are similar to those of the method embodiment, and details are not described again in this embodiment.

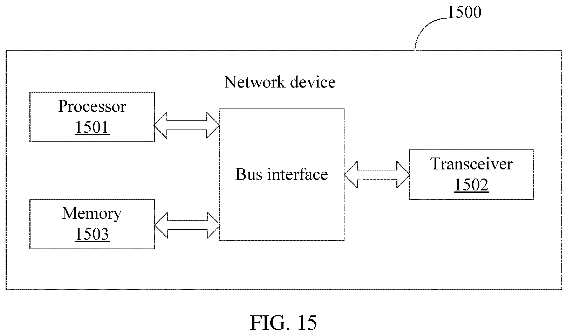

Referring to FIG. 15, FIG. 15 is a structural diagram of a network device applied to an embodiment of the present disclosure. As shown in FIG. 15, the network device 1500 includes: a processor 1501, a transceiver 1502, a memory 1503, and a bus interface, wherein the processor 1501 may be responsible for bus architecture management and general processing. The memory 1503 may store data used by the processor 1501 when the processor 1501 performs an operation.

In one embodiment of the present disclosure, the network device 1500 further includes: a computer program stored in the memory 1503 and capable of running on the processor 1501. When the computer program is executed by the processor 1501, steps of the above method in FIG. 3 or FIG. 5 are implemented.

In FIG. 15, the bus architecture may include any number of interconnected buses and bridges, which are specifically linked together by various circuits of one or more processors represented by the processor 1501 and a memory represented by the memory 1503. The bus architecture may further link together various other circuits such as peripheral devices, voltage regulators, and power management circuits. These are all known in the art, and therefore, no further description is provided herein. The bus interface provides an interface. The transceiver 1502 may be a plurality of elements, that is, including a transmitter and a receiver, and provides a unit configured to communicate with various other devices on a transmission medium.

Method or algorithm steps described in combination with the content disclosed in the present disclosure may be implemented by hardware, or may be implemented by a processor by executing a software instruction. The software instruction may be formed by a corresponding software module. The software module may be stored in a RAM, a flash memory, a ROM, an EPROM, an EEPROM, a register, a hard disk, a removable hard disk, a read-only compact disc, or a storage medium of any other form known in the art. For example, a storage medium is coupled to the processor, so that the processor can read information from the storage medium or write information into the storage medium. Certainly, the storage medium may be a component of the processor. The processor and the storage medium may be located in the ASIC. In addition, the ASIC may be located in a core network interface device. Certainly, the processor and the storage medium may exist in the core network interface device as discrete components.

A person skilled in the art should be aware that in the foregoing one or more examples, functions described in the present disclosure may be implemented by hardware, software, firmware, or any combination thereof. When implemented by software, the foregoing functions may be stored in a computer readable medium or transmitted as one or more instructions or code in the computer readable medium. The computer readable medium includes a computer storage medium and a communications medium, where the communications medium includes any medium that enables a computer program to be transmitted from one place to another. The storage medium may be any usable medium accessible to a general-purpose or dedicated computer.

The objectives, technical solutions, and beneficial effects of the present disclosure are further described in detail in the foregoing specific implementations. It should be understood that the foregoing descriptions are merely specific implementations of the present disclosure, and are not intended to limit the protection scope of the present disclosure. Any modification, equivalent replacement, or improvement made on the basis of the technical solutions of the present disclosure shall fall within the protection scope of the present disclosure.

A person skilled in the art should understand that the embodiments of the present disclosure can be provided as a method, a system, or a computer program product. Therefore, the embodiments of the present disclosure may take the form of a hardware only embodiment, a software only embodiment, or an embodiment with both software and hardware. Moreover, the embodiments of the present disclosure may use a form of a computer program product that is implemented on one or more computer-usable storage media (including but are not limited to a magnetic disk memory, a CD-ROM, an optical memory, and the like) that include computer-usable program code.

The embodiments of the present disclosure are described with reference to the flowcharts and/or block diagrams of the method, the device (system), and the computer program product according to the embodiments of the present disclosure. It should be understood that computer program instructions may be used to implement each process and/or each block in the flowcharts and/or the block diagrams and a combination of a process and/or a block in the flowcharts and/or the block diagrams. These computer program instructions may be provided to a processor of a general-purpose computer, a dedicated computer, an embedded processor, or another programmable data processing device to produce a machine, so that instructions executed by a processor of a computer or another programmable data processing device produce an apparatus for implementing a function specified in one or more processes of the flowchart and/or one or more blocks of the block diagram.

These computer program instructions may also be stored in a computer readable memory that can instruct the computer or any other programmable data processing device to work in a specific manner, so that the instructions stored in the computer readable memory generate an artifact that includes an instruction apparatus. The instruction apparatus implements a specific function in one or more processes in the flowcharts and/or in one or more blocks in the block diagrams.

These computer program instructions may also be loaded onto a computer or another programmable data processing device, so that a series of operation steps are performed on the computer or the another programmable device to produce computer-implemented processing, thereby providing instructions executed on the computer or the another programmable device to implement the function specified in one or more processes of the flowchart and/or one or more blocks of the block diagram.

Those of ordinary skills in the art can realize that the exemplary units and algorithm steps described with reference to the embodiments disclosed in this specification can be implemented by electronic hardware or a combination of computer software and electronic hardware. Whether these functions are performed by using hardware or software depends on a specific application and design constraints of the technical solution. A person skilled in the art may use different methods to achieve the described functions for each particular application, but it should not be considered that the implementation goes beyond the scope of the present disclosure.

It may be clearly understood by a person skilled in the art that, for the purpose of convenient and brief description, for a detailed operating process of the foregoing system, device, and unit, refer to a corresponding process in the foregoing method embodiments. Details are not described herein again.

In the embodiments provided in the present application, it should be understood that the disclosed apparatus and method may be implemented in other manners. For example, the apparatus embodiment described above is only an example. For example, division into the units is only logical function division. There may be other division manners in actual implementation, for example, a plurality of units or components may be combined or integrated into another system, or some features may be ignored or not implemented. In other respects, the intercoupling or direct coupling or communication connection shown or discussed may be indirect coupling or communication connection through some interfaces, apparatuses, or units; or may be implemented in electrical, mechanical, or other forms.

The units described as separate parts may or may not be physically separate, and parts displayed as units may or may not be physical units, that is, may be located in one location, or may be distributed on a plurality of network units. Some or all of the units may be selected according to actual needs to achieve the objective of the solutions of the embodiments.

In addition, function units in the embodiments of the present disclosure may be integrated into one processing unit, or each of the units may exist alone physically, or two or more units are integrated into one unit.

When the functions are implemented in a form of a software functional unit and sold or used as an independent product, the functions may be stored in a computer readable storage medium. Based on such an understanding, the technical solutions of the present disclosure essentially, or the part contributing to the related art, or some of the technical solutions may be implemented in a form of a software product. The computer software product is stored in a storage medium, and includes several instructions for enabling a computer device (which may be a personal computer, a server, a network device, or the like) to perform all or some of the steps of the methods described in the embodiments of the present disclosure. The storage medium includes various mediums, such as a USB flash disk, a removable hard disk, a ROM, a RAM, a magnetic disk, or an optical disc, that can store program code.

A person of ordinary skill in the art can understand that all or some of the procedures in the methods of the foregoing embodiments may be implemented by a computer program controlling related hardware. The program may be stored in a computer-readable storage medium. When the program is executed, the procedures of the embodiments of the foregoing methods may be performed. The foregoing storage medium may include: a magnetic disk, an optical disc, a read-only memory (Read-Only Memory, ROM), a random access memory (Random Access Memory, RAM), or the like.

It may be understood that the embodiments described in the embodiments of the present disclosure may be implemented by hardware, software, firmware, middleware, microcode, or a combination thereof. For implementation with hardware, the module, unit, and subunit may be implemented in one or more application specific integrated circuits (Application Specific Integrated Circuits, ASIC), a digital signal processor (Digital Signal Processor, DSP), a DSP device (DSP Device, DSPD), a programmable logic device (Programmable Logic Device, PLD), a field-programmable gate array (Field-Programmable Gate Array, FPGA), general processors, controllers, micro-controllers, micro-processors, and other electronic units for implementing the functions of the present application, or their combinations.

For software implementation, the technology in the embodiments of the present disclosure may be implemented through modules (for example, procedures or functions) that perform the functions in the embodiments of the present disclosure. Software code may be stored in a memory and executed by a processor. The memory may be implemented in the processor or outside the processor.

Obviously, a person skilled in the art can make various modifications and variations to the embodiments of the present disclosure without departing from the spirit and scope of the present disclosure. In this way, the present disclosure is intended to include these modifications and variations of the embodiments of the present disclosure provided that they fall within the scope of the claims of the present disclosure and their equivalent technologies.

## Claims

1. A processing method, applied to a terminal, comprising:
sending first information to a primary cell (Pcell) of a master cell group (MCG) or a primary secondary cell (PScell) of a secondary cell group (SCG), wherein the first information is used to request to release, add or change the cell of the MCG or SCG, and/or the first information is used to request to change the maximum number of multi-input multi-output layers of the cell of the MCG or SCG or request to change the maximum number of antenna ports; and
receiving second information from the Pcell of the MCG or the PScell of the SCG;
releasing, adding or changing the cell of the MCG or SCG according to the second information, and/or, changing the maximum number of the multi-input multi-output layers of the cell of the MCG or SCG or changing the maximum number of the antenna ports according to the second information.

2. The method according to claim 1, wherein afterreleasing, adding or changing the cell of the MCG or SCG according to the second information, the method further comprises:
sending third information to the Pcell of the MCG or the PScell of the SCG, wherein the third information indicates information that the cell of the MCG or SCG has been released, added or changed.

3. The method according to claim 1, wherein afterchanging the maximum number of the multi-input multi-output layers of the cell of the MCG or SCG or changing the maximum number of the antenna ports according to the second information, the method further comprises:
sending fourth information to the Pcell of the MCG or the PScell of the SCG, wherein the fourth information indicates information of changed maximum number of uplink or downlink multi-input multi-output layers of the cell of the MCG or SCG, or changed maximum number of the antenna ports.

4. The method according to any one of claims 1 to 3, wherein the cell of the MCG comprises one or more of the following:
all cells of the MCG,
part of cells of the MCG,
cells configured by all frequencies of the MCG, and
cells configured by part of frequencies of the MCG; and
the cell of the SCG comprises one or more of the following:
all cells of the SCG,
part of cells of the SCG,
cells configured by all frequencies of the SCG, and
cells configured by part of frequencies of the SCG.

5. The method according to any one of claims 1 to 4, wherein the first information, the second information, the third information or the fourth information is a radio resource control (RRC) signaling or a medium access control control element (MAC CE).

6. A processing method, applied to a network device, comprising:
receiving first information from a terminal, wherein the first information is used to request to release, add or change a cell of a master cell group (MCG) or a secondary cell group (SCG), and/or the first information is used to request to change the maximum number of multi-input multi-output layers of the cell of the MCG or SCG or request to change the maximum number of antenna ports; and
sending second information to the terminal, wherein the second information indicates the terminal to release, add or change the cell of the MCG or SCG, and/or indicates the terminal to change the maximum number of the multi-input multi-output layers of the cell of the MCG or SCG or the maximum number of the antenna ports.

7. The method according to claim 6, wherein after sending the second information to the terminal, the method further comprises:
receiving third information from the terminal, wherein the third information indicates information that the cell of the MCG or SCG has been released, added or changed.

8. The method according to claim 6, wherein after sending the second information to the terminal, the method further comprises:
receiving fourth information from the terminal, wherein the fourth information indicates information of changed maximum number of uplink or downlink multi-input multi-output layers of the cell of the MCG or SCG, or changed maximum number of antenna ports.

9. The method according to any one of claims 6 to 8, wherein
the cell of the MCG comprises one or more of the following:
all cells of the MCG,
part of cells of the MCG,
cells configured by all frequencies of the MCG, and
cells configured by part of frequencies of the MCG; and
the cell of the SCG comprises one or more of the following:
all cells of the SCG,
part of cells of the SCG,
cells configured by all frequencies of the SCG, and
cells configured by part of frequencies of the SCG.

10. The method according to any one of claims 6 to 9, wherein the first information, the second information, the third information or the fourth information is a radio resource control (RRC) signaling or a medium access control control element (MAC CE).

11. A processing method, applied to a terminal, comprising:
releasing, adding or changing a cell of a main master group (MCG) or a secondary cell group (SCG);
sending fifth information to a primary cell (Pcell) of the MCG or a primary secondary cell (PScell) of the SCG, wherein the fifth information indicates information that the cell of the MCG or SCG has been released, added or changed;
or
changing the maximum number of multi-input multi-output layers of the cell of the MCG or SCG or the maximum number of antenna ports; and
sending sixth information to the Pcell of the MCG or the PScell of the SCG, wherein the sixth information indicates information of changed maximum number of the multi-input multi-output layers of the cell of the MCG or SCG, or changed maximum number of the antenna ports.

12. The method according to claim 11, wherein
the cell of the MCG comprises one or more of the following:
all cells of the MCG,
part of cells of the MCG,
cells configured by all frequencies of the MCG, and
cells configured by part of frequencies of the MCG; and
the cell of the SCG comprises one or more of the following:
all cells of the SCG,
part of cells of the SCG,
cells configured by all frequencies of the SCG, and
cells configured by part of frequencies of the SCG.

13. The method according to any one of claims 11 to 12, wherein the fifth information or the sixth information is a radio resource control (RRC) signaling or a medium access control control element (MAC CE).

14. A processing method, applied to a network device, comprising:
receiving fifth information from a terminal, wherein the fifth information indicates information that a cell of a master cell group (MCG) or a secondary cell group (SCG) has been released, added or changed; or
receiving sixth information from the terminal, wherein the sixth information indicates information of changed maximum number of multi-input multi-output layers of the cell of the MCG or SCG, or changed maximum number of antenna ports.

15. The method according to claim 14, wherein
the cell of the MCG comprises one or more of the following:
all cells of the MCG,
part of cells of the MCG,
cells configured by all frequencies of the MCG, and
cells configured by part of frequencies of the MCG; and
the cell of the SCG comprises one or more of the following:
all cells of the SCG,
part of cells of the SCG,
cells configured by all frequencies of the SCG, and
cells configured by part of frequencies of the SCG.

16. The method according to any one of claims 14 or 15, wherein the fifth information or the sixth information is a radio resource control (RRC) signaling or a medium access control control element (MAC CE).

17. A terminal, comprising:
a first sending module, configured to send first information to a primary cell (Pcell) of a master cell group (MCG) or a primary secondary cell (PScell) of a secondary cell group (SCG), wherein the first information is used to request to release, add or change the cell of the MCG or SCG, and/or the first information is used to request to change the maximum number of multi-input multi-output layers of the cell of the MCG or SCG or request to change the maximum number of antenna ports; and
a first receiving module, configured to receive second information from the Pcell of the MCG or the PScell of the SCG, and release, add or change the cell of the MCG or SCG according to the second information, and/or change the maximum number of multi-input multi-output layers of the cell of the MCG or SCG or the maximum number of antenna ports.

18. A network device, comprising:
a second receiving module, configured to receive first information from a terminal, wherein the first information is used to request to release, add or change a cell of a master cell group (MCG) or a secondary cell group (SCG), and/or the first information is used to request to change the maximum number of multi-input multi-output layers of the cell of the MCG or SCG or request to change the maximum number of antenna ports; and
a fourth sending module, configured to send second information to the terminal, wherein the second information indicates the terminal to release, add or change the cell of the MCG or SCG, and/or to change the maximum number of the multi-input multi-output layers of the cell of the MCG or SCG or the maximum number of the antenna ports.

19. A terminal, comprising:
a processing module, configured to release, add or change a cell of a master cell group (MCG) or a secondary cell group (SCG), or change the maximum number of multi-input multi-output layers of the cell of the MCG or SCG or the maximum number of antenna ports; and
a fifth sending module, configured to send fifth information to a primary cell (Pcell) of the MCG or a primary secondary cell (PScell) of the SCG, the fifth information indicating information that the cell of the MCG or SCG has been released, added or changed, or configured to send sixth information to the Pcell of the MCG or the PScell of the SCG, the sixth information indicating the maximum number of the multi-input multi-output layers of the cell of the MCG or SCG, or the maximum number of the antenna ports.

20. A network device, comprising:
a fifth receiving module, configured to receive fifth information from a terminal, the fifth information indicating information that a cell of a master cell group (MCG) or a secondary cell group (SCG) has been released, added or changed, or configured to receive sixth information from the terminal, the sixth information indicating the maximum number of multi-input multi-output layers of the cell of the MCG or SCG, or the maximum number of antenna ports.

21. A terminal, comprising: a processor, a memory, and a program stored in the memory and capable of running on the processor, wherein when the program is executed by the processor, the steps of the processing method according to any one of claims 1 to 5 or the steps of the processing method according to any one of claims 11 to 13 are implemented.

22. A network device, comprising: a processor, a memory, and a program stored in the memory and capable of running on the processor, wherein when the program is executed by the processor, the steps of the processing method according to any one of claims 6 to 10 or the steps of the processing method according to any one of claims 14 to 16 are implemented.

23. A computer readable storage medium, wherein the computer readable storage medium stores a computer program; and when the computer program is executed by a processor, the steps of the processing method according to any one of claims 1 to 16 are implemented.
